# EUROPÄISCHE PATENTSCHRIFT

(11) **EP 3 947 012 B1**
(45) Veröffentlichungstag und Bekanntmachung des Hinweises auf die Patenterteilung: **03.09.2025**
(21) Anmeldenummer: 20713847.0
(22) Anmeldetag: 11.03.2020
(51) Int. Cl.: B60R 11/02, B60R 11/00, B60R 21/055, B60K 35/10, B60K 35/22, B60K 35/50

(54) **VORRICHTUNG ZUR AUFNAHME EINER ANZEIGE-BEDIENEINRICHTUNG**
DEVICE FOR RECEIVING A DISPLAY OPERATING DEVICE
DISPOSITIF POUR RECEVOIR UN DISPOSITIF DE COMMANDE À AFFICHAGE

(30) Priorität: 02.04.2019 DE 102019204697
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: SYLDATKE, Ralf, 44319 Dortmund (DE)
(86) Internationale Anmeldenummer: PCT/EP2020/056571
(87) Internationale Veröffentlichungsnummer: WO 2020/200680

(56) Entgegenhaltungen:
- EP-A1- 3 045 340
- EP-B1- 3 045 340
- DE-A1- 102016 200 902
- DE-T5- 112013 005 551
- US-A1- 2006 119 180
- US-A1- 2015 034 774

## Beschreibung

Die Erfindung betrifft eine Vorrichtung zur Aufnahme einer Anzeige- und Bedieneinrichtung und zur Positionierung der Anzeige-Bedieneinrichtung an einer Fahrzeugstruktur.

Vorrichtungen der gattungsgemäßen Art sind bekannt.

Die Vorrichtung besitzt zunächst einen Aufnahmebereich für eine Anzeige-Bedieneinrichtung, die beispielsweise von einem Display gebildet ist. Das Display dient zur Anzeige von Informationen und/oder zur Wiedergabe von Medieninhalten. Zusätzlich können Bedienelemente, beispielsweise durch ein berührungsempfindliches Display integriert sein.

Damit derartige Anzeige-Bedieneinrichtungen im Kraftfahrzeug platziert werden können, ist vorgesehen, die Vorrichtung mit einer Führung auszustatten, die in entsprechende korrespondierende Aufnahmen, beispielsweise in ein Schienensystem einbringbar sind. Hierzu sind Gleitkörper vorgesehen, die in eine entsprechende korrespondierend ausgebildete Schiene eingebracht werden. Die Gleitkörper sind mit der Vorrichtung verbunden, so dass gleichzeitig die gesamte Vorrichtung und somit auch die Anzeige-Bedieneinrichtung im Kraftfahrzeug positioniert ist.

Da die Anzeige-Bedieneinrichtung in einem frei zugänglichen Bereich, so zum Beispiel im Innenraum eines Kraftfahrzeuges angeordnet ist, kann diese unterschiedlichen Belastungen ausgesetzt sein. So kann beispielsweise eine Belastung in z-Richtung (Fahrzeughochachse) durch ein ungewolltes Abstützen auf der Anzeige-Bedieneinrichtung erfolgen. Die entsprechende Kraft muss dann durch die Gleitkörper abgefangen und in das Schienensystem eingeleitet werden. Da die Gleitkörper einen relativ geringen Abstand haben, erfolgt eine relativ große Belastung des Schienensystems, insbesondere auch dadurch, dass die Gleitkörper beabstandet zu der Anzeige-Bedieneinrichtung angeordnet sind, so dass durch den somit vorhandenen Hebelarm relativ große Kräfte abgefangen werden müssen.

Ferner kann eine Krafteinwirkung in der x-Richtung (Fahrzeuglängsachse) erfolgen. Um ein Verletzungsrisiko für Kraftfahrzeuginsassen zu minimieren sind der Vorrichtung federnde Elemente innerhalb der Fahrzeugstruktur zugeordnet, die eine Energie durch auftretende Belastungen in x-Richtung, wie beispielsweise beim Kopfaufschlagtest, auffangen. Die Federelemente müssen separat positioniert werden und sind mit ihrer Federrate so auszulegen, dass maximale Werte für Beschleunigung und Kräfte nicht überschritten werden.

DE 11 2013 005 551 T5 offenbart ein Anzeigebefestigungssystem für reduziertes HIC (Head Injury Ceriterion). Um Passagiere von Fahrzeugen, insbesondere von Flugzeugen, vor Kopfverletzungen zu schützen, wenn eine plötzliche schwere Bremsung auftritt und der Passagier nach vorne geworfen wird. Die Anzeige und somit das Anzeigebefestigungssystem sind üblicherweise in einem Bereich angeordnet in dem ein Kopf der Passagiere auf die Anzeige aufschlagen könnte. Um hier das Verletzungsrisiko zu minimieren ist die Anzeige über Befestigungsmittel an der Fahrzeugstruktur befestigt, die eine Sollbruchstelle aufweisen. Durch die Sollbruchstelle wird bei einer übermäßigen Belastung eine Bewegung der Anzeige in die Fahrzeugstruktur hinein ermöglicht.

DE 10 2016 200 902 A1 offenbart eine Bildschirmeinrichtung für ein Fahrzeug. Die Bildschirmeinrichtung ist über eine Befestigungseinheit an einem Armaturenabschnitt eines Fahrzeuges befestigt. Die Befestigungseinheit umfasst hierbei ein Rotationselement, mittels der die Bildschirmeinrichtung aus einer ersten Position in eine zweite Position bei einer Krafteinleitung auf die Bildschirmeinheit rotieren kann.

US 2015 003 477 4 A1 offenbart eine Vorrichtung zur Aufnahme einer Radioeinheit und zur Positionierung der Radioeinheit an einer Fahrzeugstruktur. Es ist eine Führung vorgesehen, die in Anlagekontakt mit einer korrespondierenden Aufnahme der Fahrzeugstruktur bringbar ist und die Führungselemente und elastische Elemente umfasst.

Der Erfindung liegt die Aufgabe zugrunde, eine Vorrichtung zur Aufnahme einer Anzeige-Bedieneinrichtung zu schaffen, die einfach aufgebaut ist und eine sichere sowie nachgiebige Positionierung in einer Fahrzeugstruktur gewährleistet.

Erfindungsgemäß wird diese Aufgabe durch eine Vorrichtung mit den in Anspruch 1 genannten Merkmalen gelöst. Dadurch, dass eine Führung der Vorrichtung zur Aufnahme einer Anzeige-Bedieneinrichtung, die in Anlagekontakt mit einer korrespondierenden Aufnahme einer Fahrzeugstruktur bringbar ist, gleichzeitig Führungselemente und Deformationselemente umfasst, ist vorteilhaft möglich, die Vorrichtung sehr kompakt aufzubauen und ferner kann auf die zusätzliche Anordnung von Federelementen verzichtet werden, so dass sich der Bauteilaufwand insgesamt verringert.

Ferner ist erfindungsgemäß vorgesehen, dass das Führungselement gleichzeitig das Deformationselement ausbildet. Hierdurch wird in einfacher Weise ein multifunktionales Bauteil in kompakter Bauweise geschaffen.

Ferner ist erfindungsgemäß vorgesehen, dass das Führungselement als Deformationsabschnitt eine wabenförmige Struktur aufweist. Hierdurch lässt sich in einfacher Weise durch Gestaltung der wabenförmigen Struktur der Deformationsabschnitt gleichzeitig in dem Führungselement integrieren.

In bevorzugter Ausgestaltung der Erfindung ist vorgesehen, dass das Führungselement wenigstens zwei mit einem Abstand zueinander ausgebildete Gleitabschnitte aufweist. Hierdurch wird vorteilhaft möglich, die Vorrichtung kippfrei in der Fahrzeugstruktur zu positionieren.

Ferner ist bevorzugt, dass das Führungselement als Deformationsabschnitt eine wabenförmige Struktur aufweist. Hierdurch lässt sich in einfacher Weise durch Gestaltung der wabenförmigen Struktur der Deformationsabschnitt gleichzeitig in dem Führungselement integrieren.

Darüber hinaus ist in bevorzugter Ausgestaltung der Erfindung vorgesehen, dass wenigstens eine Wabe der wabenförmigen Struktur gleichzeitig einen Gleitabschnitt ausbildet. Dies führt vorteilhaft dazu, dass der Abstand zwischen den Gleitabschnitten der Führungselemente relativ groß gewählt werden kann, so dass eine besonders gute Führung in der Fahrzeugstruktur möglich ist.

Schließlich ist in bevorzugter Ausgestaltung der Erfindung vorgesehen, dass die Fahrzeugstruktur Führungsschienen zur Aufnahme der Führungselemente aufweist, wobei vorzugsweise die Führungsschienen einen Anschlag für die Deformationsabschnitte der Führungselemente aufweisen. Hierdurch wird in besonders einfacher Weise eine Montage der Vorrichtung in der Fahrzeugstruktur möglich, wobei gleichzeitig eine definierte Positionierung, eine kippfreie Anordnung und eine insbesondere in x-Richtung (Fahrzeuglängsachse) nachgiebige Anordnung der Vorrichtung möglich.

Weitere bevorzugte Ausgestaltungen der Erfindung sind in den übrigen, in den Unteransprüchen genannten Merkmalen offenbart.

Die Erfindung wird nachfolgend in Ausführungsbeispielen anhand der zugehörigen Zeichnungen erläutert. Es zeigen:
- Figur 1: eine Vorrichtung zur Aufnahme einer Anzeige-Bedieneinrichtung gemäß dem Stand der Technik;
- Figur 2: eine schematische Seitenansicht der erfindungsgemäßen Vorrichtung;
- Figur 3: eine Einzeldarstellung eines Führungselements der Vorrichtung;
- Figur 4: ein in einer Schiene aufgenommenen Führungselement;
- Figur 5: eine Darstellung der Deformationswirkung der Führungselemente.

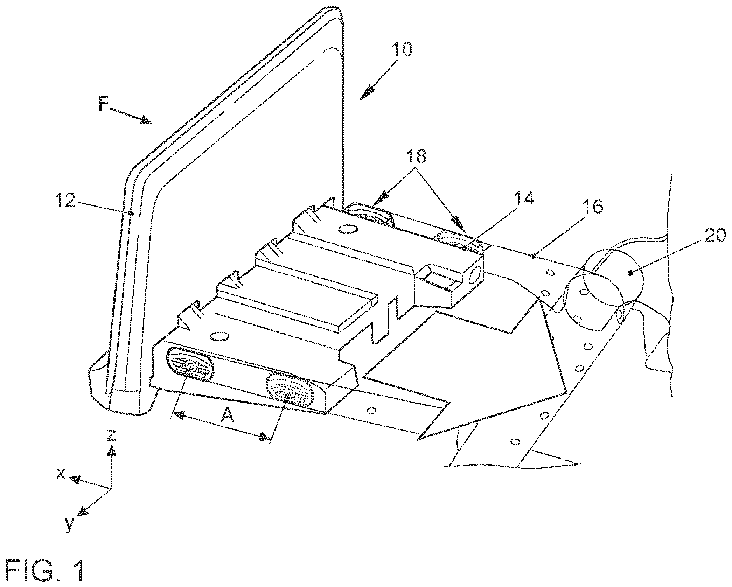

Figur 1 zeigt eine insgesamt mit 10 bezeichnete Vorrichtung zur Aufnahme einer Anzeige-Bedieneinrichtung 12, die beispielsweise von einem berührungsempfindlichen Display gebildet ist. Die Anzeige-Bedieneinrichtung 12 ist über geeignete Befestigungsmittel mit der Vorrichtung 10 verbunden.

Die Vorrichtung 10 weist ferner eine Führung 14 auf, mittels der die Vorrichtung 10 in einer in Figur 1 nicht dargestellten Fahrzeugstruktur positioniert werden kann. Die Fahrzeugstruktur weist hierzu hier lediglich angedeutete Führungsschienen 16 auf, innerhalb der die Führung 14 mittels Gleitkörpern 18 eingeschoben ist. Die Gleitkörper 18 besitzen einen Abstand A zueinander. Innerhalb der Fahrzeugstruktur sind Federelemente 20 angeordnet, gegen die die Vorrichtung 10 mit seiner Führung 14 aufschlägt, wenn eine Kraft F in x-Richtung (Fahrzeuglängsrichtung) aufgebracht wird. Die Kraft F wird beispielsweise bei einem Crashfall durch ein Körperteil einer Person aufgebracht. Die Federelemente 20 führen dazu, dass die Vorrichtung 10 mit der Anzeige-Bedieneinrichtung 12 nachgibt und so das Verletzungsrisiko minimiert ist.

In Figur 1 ist der Stand der Technik dargestellt.

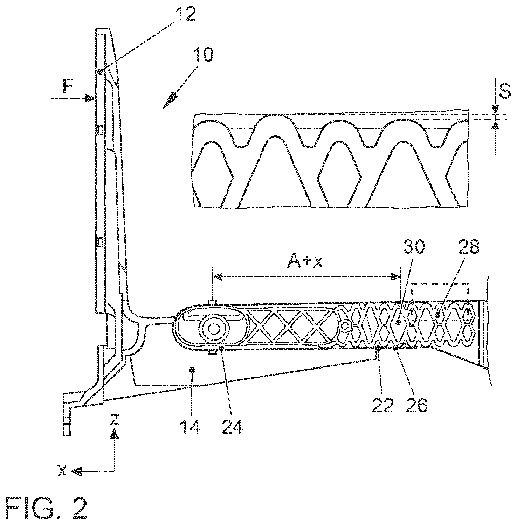

Anhand der Figur 2 wird nun die erfindungsgemäße Ausgestaltung der Vorrichtung 10 verdeutlicht. Gleiche Teile sind mit gleichen Bezugszeichen versehen.

Die Führung 14 weist ein Führungselement 22 auf, dass sowohl die Führung in der Führungsschiene (Figur 1) als auch die Absorption von kinetischer Energie bei Aufbringen der Kraft F übernimmt. Das Führungselement 22 besitzt hierzu einen ersten Gleitabschnitt 24 und einen zweiten Gleitabschnitt 26. Die Gleitabschnitte 24, 26 besitzen einen Abstand (A+x) voneinander. Der zweite Gleitabschnitt 26 ist hierbei an einer wabenförmigen Struktur 28, des Führungselementes 22 gebildet. Eine Wabe 30 der wabenförmigen Struktur 28 ist gegenüber den übrigen Waben exponiert ausgebildet, so dass diese den zweiten Gleitabschnitt 26 bildet, der in Anlagekontakt mit der Führungsschiene 16 kommt.

In Figur 2 ist nur ein Führungselement 22 dargestellt. Die Vorrichtung 10 weist üblicherweise mindestens zwei der Führungselemente 22 auf, die in y-Richtung (Fahrzeugquerachse) beabstandet zueinander angeordnet sind.

Aufbau und Funktion der Führungselemente 22 wird anhand der nachfolgenden Figuren noch näher erläutert.

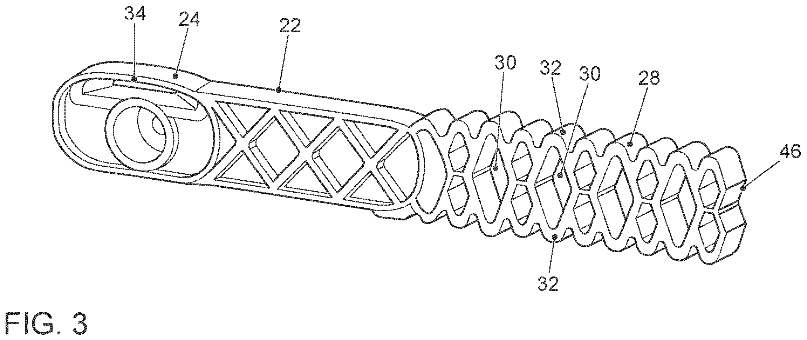

In Figur 3 zeigt eine Perspektivansicht des Führungselementes 22. Deutlich zu erkennen ist die wabenförmige Struktur 28 mit den größeren, das heißt, gemäß Darstellung nach oben und unten über die Wabenstruktur 28 überstehenden Waben 30, die mit ihrer äußeren Kontaktfläche 32 den Gleitabschnitt 26 des Führungselementes 22 bildet.

In einer weiteren Ausführungsvariante können eine oder auch mehrere dieser vergrößerten Waben 30 vorgesehen sein.

Das Führungselement 22 umfasst ferner den Gleitabschnitt 24 der von einem elastisch gelagerten Wandungsabschnitt 34 des Führungselement 22 gebildet ist.

Das Führungselement 22 ist auf geeignete Weise mit der Führung 14 der Vorrichtung 10 verbunden. Die Führung 14 wird in die Führungsschienen 16 (Figur 1) eingeschoben, so dass die Kontaktflächen 32 und der Wandungsabschnitt 34 mit der oberen Begrenzung der Führungsschiene 16 in Anlagekontakt kommen. Aufgrund der dem Wandungsabschnitt 34 und der Kontaktfläche 32 inne wohnenden Elastizität erfolgt der Anlagekontakt mit einer Vorspannung. Diese ist durch Materialwahl und Dimensionierung der Führungselemente 22 einstellbar.

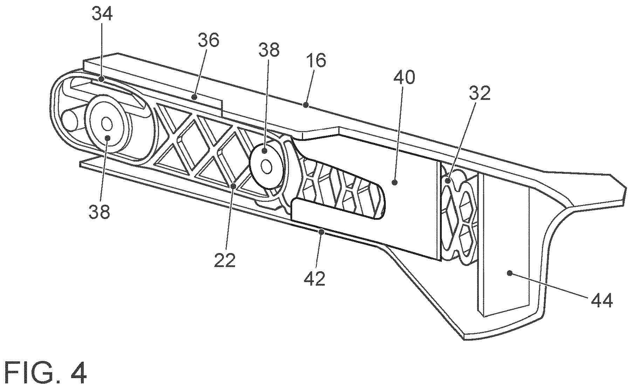

Figur 4 zeigt in einer schematischen Perspektivansicht die Anordnung eines Führungselementes 22 in einer Führungsschiene 16. Erkennbar ist, wie eine obere Begrenzung 36 der Führungsschiene 16 in Anlagekontakt mit dem Wandungsabschnitt 34 und der Kontaktfläche 32 steht. Über hier angedeutete Befestigungspunkte 38 folgt eine Verbindung mit der Führung 14 der Vorrichtung 10, die letztendlich die Anzeige-Bedieneinheit 12 aufnimmt. Die Verbindung erfolgt hierbei über nicht dargestellte zusätzliche Befestigungsmittel, über Rastverbindungen oder auf andere geeignete Weise.

Anhand der Figur 4 wird weiterhin deutlich, dass der Führungsschiene 16 ein Führungsblech 40 zugeordnet ist. Dieses Führungsblech 40 dient der Fixierung des Führungselementes 22 in y-Richtung (Fahrzeugquerachse). Der obere Abschluss 36 und der korrespondierende untere Abschnitt 42 der Führungsschiene 16 dienen der Fixierung des Führungselementes 22 in z-Richtung (Fahrzeughochachse).

Die Führungsschiene 16 bildet ferner einen Anschlag 44 aus, der in Anlagekontakt mit einem Endabschnitt 46 (Figur 3) des Führungselementes 22 kommt.

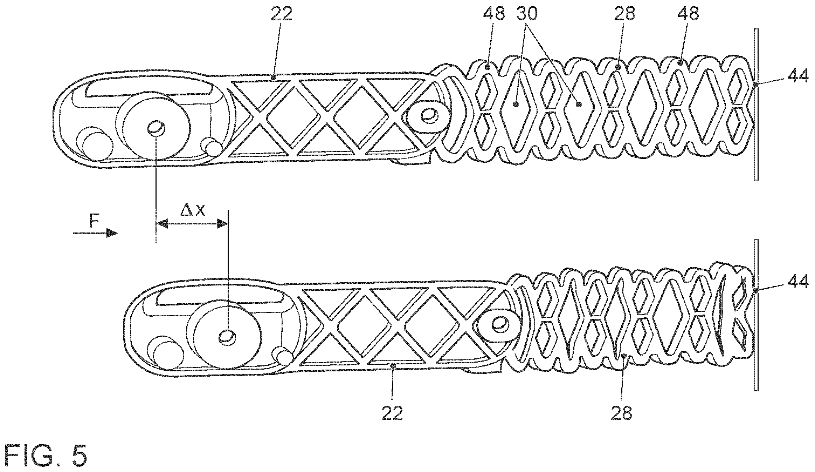

Neben der Führung der Vorrichtung 10 in der Fahrzeugstruktur über die Führungselemente 22 und die entsprechenden Führungsschienen 16 übernimmt das Führungselement 22 gleichzeitig die Funktion eines Deformationselementes. Anhand Figur 5 wird dies näher erläutert.

Die obere Darstellung in Figur 5 zeigt das Führungselement 22 in seiner normalen Betriebsstellung und die untere Abbildung der Figur 5 zeigt das Führungselement 22 in einer deformierten Stellung. Angedeutet ist ferner der Anschlag 44 der Führungsschiene 16. Die Führungsschiene 16 ist in die Fahrzeugstruktur fest integriert und bestimmt somit eine definierte Anschlagposition für das Führungselement 22.

Anhand der oberen Darstellung in Figur 5 wird die wabenförmige Struktur 28 des Führungselementes 22 deutlich. Zwischen den größeren Waben 30 die, wie bereits erläutert, die Führung des Führungselementes 22 in der Führungsschiene 16 übernehmen, sind jeweils paarweise kleinere Waben 48 angeordnet. Die Waben 30 und 48 sind vorzugsweise symmetrisch zueinander ausgebildet. Das heißt, diese besitzen beispielsweise jeweils einen gleichen Öffnungswinkel von 130 Grad und eine Wandstärke von beispielsweise 1,6 Millimeter.

Wird das Führungselement 22 nun durch Beaufschlagung mit der Kraft F in x-Richtung gegen den Anschlag 44 gedrückt, deformieren sich die Waben 30 und 48. Das Führungselement 22 kann um den Weg Δx in die Fahrzeugstruktur hinein, das heißt, gegen den feststehenden Anschlag 44 verschoben werden.

Die Waben 30 und 48 verformen sich im elastisch-plastischen Bereich und wandeln in Abhängigkeit des Betrages Δx die Bewegungsenergie in Verformungsenergie um.

Je nach konstruktiver Ausgestaltung der wabenförmigen Struktur 28, das heißt, insbesondere der Wandstärke der Waben 30 und 48, beziehungsweise der Öffnungswinkel der Waben 30 und 48 lassen sich die Parameter anpassen, bei welcher Kraft F, welcher Deformationsweg Δx ermöglicht wird.

Insgesamt ist mit dem Führungselement 22 ein multifunktionales Bauteil in kompakter Bauweise geschaffen, welches eine individuelle Kraft-Weg-Kurve ermöglicht. Durch die einteilige Herstellung werden zusätzliche Elemente entweder für die Führung oder die Ausweichmöglichkeit in x-Richtung vermieden.

### Bezugszeichenliste

- 10: Vorrichtung
- 12: Anzeige-Bedieneinrichtung
- 14: Führung
- 16: Führungsschienen
- 18: Gleitkörpern
- 20: Federelemente
- 22: Führungselement
- 24: erster Gleitabschnitt
- 26: zweiter Gleitabschnitt
- 28: wabenförmigen Struktur
- 30: Waben
- 32: äußere Kontaktfläche
- 34: Wandungsabschnitt
- 36: obere Abschnitt/ Begrenzung/ Abschluss
- 38: Befestigungspunkte
- 40: Führungsblech
- 42: unterer Abschnitt
- 44: Anschlag
- 46: Endabschnitt
- 48: kleine Wabe

- A: Abstand
- F: Kraft

## Patentansprüche

1. Vorrichtung (10) zur Aufnahme einer Anzeige-Bedieneinrichtung (12) und zur Positionierung der Anzeige-Bedieneinrichtung (12) an einer Fahrzeugstruktur, mit mindestens einer Führung (14), die in Anlagekontakt mit einer korrespondierenden Aufnahme der Fahrzeugstruktur bringbar ist, wobei die Führung (14) sowohl ein Führungselement (22) als auch ein Deformationselement (28) umfasst, wobei das Führungselement (22) gleichzeitig das Deformationselement (28) ausbildet, **dadurch gekennzeichnet, dass** das Führungselement (22) als einen Deformationsabschnitt eine wabenförmige Struktur (28) aufweist.

2. Vorrichtung nach Anspruch 1, **dadurch gekennzeichnet, dass** das Führungselement (22) wenigstens zwei mit einem Abstand (A+x) zueinander angeordnete Gleitabschnitte (24, 26) aufweist.

3. Vorrichtung nach Anspruch 2, **dadurch gekennzeichnet, dass** wenigstens eine Wabe (30) der wabenförmigen Struktur (28) gleichzeitig einen der Gleitabschnitte (26) ausbildet.

4. Vorrichtung nach Anspruch 3, **dadurch gekennzeichnet, dass** zwischen den Waben (30) weitere Waben (48) ausgebildet sind.

5. Vorrichtung nach Anspruch 4, **dadurch gekennzeichnet, dass** die Waben (30) und die weiteren Waben (48) einen Öffnungswinkel von 130 Grad aufweisen.

6. Vorrichtung nach einem der vorhergehenden Ansprüche, **dadurch gekennzeichnet, dass** die Fahrzeugstruktur eine Führungsschiene (16) zur Aufnahme des Führungselementes (22) aufweist.

7. Vorrichtung nach Anspruch 6. **dadurch gekennzeichnet, dass** die Führungsschiene (16) einen Anschlag (44) für den Deformationsabschnitt des Führungselementes (22) ausbildet.

## Claims

1. Apparatus (10) for receiving a display-operating device (12) and for positioning the display-operating device (12) on a vehicle structure, having at least one guide (14) which can be brought into contact with a corresponding receptacle of the vehicle structure, the guide (14) comprising both a guide element (22) and a deformation element (28), the guide element (22) simultaneously forming the deformation element (28), **characterized in that** the guide element (22) has a honeycomb structure (28) as a deformation portion.

2. Apparatus according to claim 1, **characterized in that** the guide element (22) has at least two sliding portions (24, 26) arranged at a distance (A+x) from one another.

3. Apparatus according to claim 2, **characterized in that** at least one cell (30) of the honeycomb structure (28) simultaneously forms one of the sliding portions (26).

4. Apparatus according to claim 3, **characterized in that** further cells (48) are formed between the cells (30).

5. Apparatus according to claim 4, **characterized in that** the cells (30) and the further cells (48) have an opening angle of 130 degrees.

6. Apparatus according to any of the preceding claims, **characterized in that** the vehicle structure has a guide rail (16) for receiving the guide element (22).

7. Apparatus according to claim 6, **characterized in that** the guide rail (16) forms a stop (44) for the deformation portion of the guide element (22).

## Revendications

1. Dispositif (10) permettant de loger un appareil de manipulation d'affichage (12) et de positionner l'appareil de manipulation d'affichage (12) sur une structure formant véhicule, comportant au moins un guidage (14) qui peut être amené en contact d'appui avec un logement correspondant de la structure formant véhicule, dans lequel le guidage (14) comprend aussi bien un élément de guidage (22) qu'un élément de déformation (28), dans lequel l'élément de guidage (22) forme simultanément l'élément de déformation (28), **caractérisé en ce que** l'élément de guidage (22) présente une structure alvéolaire (28) comme section de déformation.

2. Dispositif selon la revendication 1, **caractérisé en ce que** l'élément de guidage (22) présente au moins deux sections de glissement (24, 26) disposées à une distance (A + x) l'une de l'autre.

3. Dispositif selon la revendication 2, **caractérisé en ce qu'**au moins une alvéole (30) de la structure alvéolaire (28) forme simultanément l'une des sections de glissement (26).

4. Dispositif selon la revendication 3, **caractérisé en ce que** d'autres alvéoles (48) sont formées entre les alvéoles (30).

5. Dispositif selon la revendication 4, **caractérisé en ce que** les alvéoles (30) et les autres alvéoles (48) présentent un angle d'ouverture de 130 degrés.

6. Dispositif selon l'une des revendications précédentes,
**caractérisé en ce que** la structure formant véhicule présente un rail de guidage (16) pour le logement de l'élément de guidage (22).

7. Dispositif selon la revendication 6, **caractérisé en ce que** le rail de guidage (16) forme une butée (44) pour la section de déformation de l'élément de guidage (22).
